(19) Europäisches Patentamt
European Patent Office
Office européen des brevets

(11) EP 4 089 447 A1

(12) **EUROPEAN PATENT APPLICATION**
published in accordance with Art. 153(4) EPC

(43) Date of publication:
**16.11.2022 Bulletin 2022/46**

(21) Application number: **21738833.9**

(22) Date of filing: **06.01.2021**

(51) International Patent Classification (IPC):
*G02B 1/14 (2015.01)* *C08F 24/00 (2006.01)*
*C09D 7/20 (2018.01)* *C09D 127/14 (2006.01)*
*C09D 127/16 (2006.01)* *G02B 1/111 (2015.01)*

(52) Cooperative Patent Classification (CPC):
**B32B 27/30; C08F 24/00; C08F 34/02; C09D 7/20; C09D 127/12; C09D 127/14; C09D 127/16; C09D 201/04; G02B 1/111; G02B 1/14; G09F 9/00**

(86) International application number:
**PCT/JP2021/000254**

(87) International publication number:
**WO 2021/141061 (15.07.2021 Gazette 2021/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.01.2020 JP 2020001642**

(71) Applicant: **Daikin Industries, Ltd.**
**Osaka-shi, Osaka 530-8323 (JP)**

(72) Inventors:
- **TANAKA, Yoshito**
  **Osaka-shi, Osaka 530-8323 (JP)**
- **MATSUURA, Makoto**
  **Osaka-shi, Osaka 530-8323 (JP)**
- **SUZUKI, Yuuki**
  **Osaka-shi, Osaka 530-8323 (JP)**
- **OGATA, Akitoshi**
  **Osaka-shi, Osaka 530-8323 (JP)**
- **KISHIKAWA, Yosuke**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(54) **DISPLAY PROTECTIVE FILM**

(57) An object of the present disclosure is to provide a protective display film formed from a fluoropolymer with hardness. The present disclosure relates to a protective display film comprising a fluoropolymer, wherein the fluoropolymer comprises, as a main component, a monomer unit represented by formula (1):

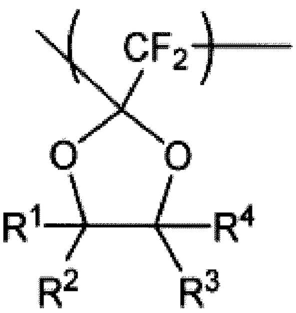
(1)

wherein $R^1$ to $R^4$ are each independently a fluorine atom, a fluoroalkyl group, or a fluoroalkoxy group.

EP 4 089 447 A1

## Description

Technical Field

The present disclosure relates to, for example, a protective display film, a display comprising the protective display film, and a coating agent for forming a protective display film.

Background Art

A protective display film is formed on a display for the purpose of protection, anti-reflection, etc. Although a fluoropolymer film (Patent Literature 1) is also considered to be a protective display film, an improvement in hardness and other physical properties is required.

Citation List

Patent Literature

PTL 1: JP2002-038075A

Summary of Invention

Technical Problem

An object of the present disclosure is to provide a protective display film formed from a fluoropolymer with hardness. Another object of the present disclosure is to provide a coating agent for form a protective display film. Still another object of the present disclosure is to provide a display comprising a protective display film formed from a fluoropolymer.

Solution to Problem

The present disclosure includes the following embodiments.

Item 1.

A protective display film comprising a fluoropolymer, wherein

the fluoropolymer comprises, as a main component, a monomer unit represented by formula (1):

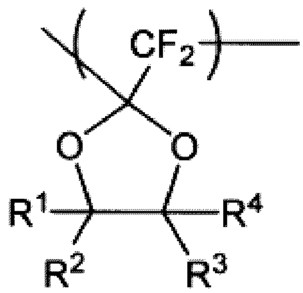

(1)

wherein $R^1$ to $R^4$ are each independently a fluorine atom, a fluoroalkyl group, or a fluoroalkoxy group.

Item 2.

The protective display film according to Item 1, wherein the fluoropolymer further comprises a fluoroolefin unit.

Item 3.

The protective display film according to Item 2, wherein the fluoroolefin unit is at least one member selected from the group consisting of a fluorine-containing perhaloolefin unit, a vinylidene fluoride unit, a trifluoroethylene unit, a pentafluoropropylene unit, and a 1,1,1,2-tetrafluoro-2-propylene unit.

Item 4.

The protective display film according to Item 3, wherein the fluorine-containing perhaloolefin unit is at least one member selected from the group consisting of a chlorotrifluoroethylene unit, a tetrafluoroethylene unit, a hexafluoropropylene unit, a perfluoro(methyl vinyl ether) unit, a perfluoro(ethyl vinyl ether) unit, a perfluoro(propyl vinyl ether) unit, a perfluoro(butyl vinyl ether) unit, and a perfluoro(2,2-dimethyl-1,3-dioxol) unit.

Item 5.

The protective display film according to Item 2, wherein the fluoroolefin unit is at least one member selected from the group consisting of a chlorotrifluoroethylene unit, a tetrafluoroethylene unit, a hexafluoropropylene unit, a perfluoro(methyl vinyl ether) unit, and a perfluoro(propyl vinyl ether) unit.

Item 6.

The protective display film according to any one of Items 1 to 5, having an average film thickness of 10 nm or more. Item 7.

The protective display film according to any one of Items 1 to 6, having an indentation hardness of 250 $N/mm^2$ or more and 1000 $N/mm^2$ or less.

Item 8.

The protective display film according to any one of Items 1 to 7, having an indentation elastic modulus of 2.5 GPa or more and 10 GPa or less.

Item 9.

The protective display film according to any one of Items 1 to 8, having a total light transmittance of 90% or more. Item 10.

The protective display film according to any one of Items 1 to 9, having a refractive index of 1.29 or more and 1.37 or less.

Item 11.

The protective display film according to any one of Items 1 to 10, having an Abbe number of 80 or more and 100 or less.

Item 12.

The protective display film according to any one of Items 1 to 11, having a water absorption at 24°C of 0.1% or less. Item 13.

The protective display film according to any one of Items 1 to 12, wherein the fluoropolymer has a glass transition temperature of 110°C or higher.

Item 14.

A display comprising the protective display film of any one of Items 1 to 13.

Item 15.

A coating agent for forming the protective display film of any one of Items 1 to 13, the coating agent comprising a fluoropolymer and an aprotic solvent,

wherein
the fluoropolymer comprises, as a main component, a monomer unit represented by formula (1):

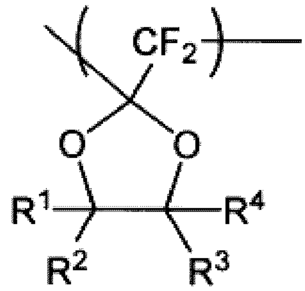

(1)

wherein $R^1$ to $R^4$ are each independently a fluorine atom, a fluoroalkyl group, or a fluoroalkoxy group.

Item 16.

The coating agent according to Item 15, wherein the content of the fluoropolymer is 20 mass% or more and 65 mass% or less based on the total mass of the coating agent.

Item 17.

The coating agent according to Item 15 or 16, wherein the aprotic solvent is at least one solvent selected from the group consisting of perfluoroaromatic compounds, perfluorotrialkylamines, perfluoroalkanes, hydrofluorocarbons, perfluorocyclic ethers, hydrofluoroethers, and olefin compounds containing at least one chlorine atom.

Item 18.

The coating agent according to any one of Items 15 to 17, wherein the aprotic solvent is at least one hydrofluoroether.

Advantageous Effects of Invention

The present disclosure is capable of providing a protective display film comprising a fluoropolymer with hardness. The present disclosure is capable of providing a coating agent for forming a protective display film.

Brief Description of Drawings

Fig. 1 is a chart showing the transmittance at each wavelength of the film tested in Example 1.

Description of Embodiments

The above overview of the present disclosure is not intended to describe each of the disclosed embodiments or all of the implementations of the present disclosure.
The following description of the present disclosure illustrates embodiments of examples in more detail.
In several parts of the present disclosure, guidance is provided through examples, and these examples can be used in various combinations.
In each case, the group of examples can function as a non-exclusive and representative group.
All publications, patents, and patent applications cited herein are incorporated herein by reference in their entirety.

Terms

Unless otherwise specified, the symbols and abbreviations in the present specification can be understood in the sense commonly used in the technical field to which the present disclosure pertains, according to the context of the present specification.
In the present specification, the terms "comprise" and "contain" are used with the intention of including the terms "consisting essentially of" and "consisting of."
Unless otherwise specified, the steps, treatments, or operations described in the present specification can be performed at room temperature. In the present specification, room temperature can mean a temperature within the range

of 10°C or higher and 40°C or lower.

In the present specification, the phrase "$C_n$-$C_m$" (n and m are each a number) indicates that the number of carbon atoms is n or more and m or less, as would be commonly understood by a person skilled in the art.

In the present specification, the expression "thickness" or simply "film thickness" with respect to a film means an average film thickness. The "average film thickness" is determined as follows.

Average Film Thickness

The average film thickness is the average value of a thickness measured 5 times with a micrometer. When measuring the thickness of a film itself is difficult, such as when a film formed on a base material of a substrate etc. cannot be peeled off, the average film thickness is calculated by measuring the thickness of the base material before film formation and the thickness of the base material after film formation 5 times each with a micrometer, and subtracting the average value of the thickness before film formation from the average value of the thickness after film formation.

When the measurement cannot be performed with a micrometer, the film thickness obtained by measuring the line profile of the cut surface of a film to be measured with an atomic force microscope (AFM) is defined as the average film thickness.

Specifically, the average film thickness is a value determined by the method described in a specific example of the present disclosure.

In the present specification, the simple expression "molecular weight" means mass average molecular weight. The mass average molecular weight is determined as follows.

Mass Average Molecular Weight

The mass average molecular weight is measured by using the following GPC analysis method. Specifically, the mass average molecular weight is a value determined by the method described in a specific example of the present disclosure.

GPC Analysis Method

Sample Preparation Method

A polymer is dissolved in perfluorobenzene to prepare a 2 mass% polymer solution, and the polymer solution is passed through a membrane filter (0.22 μm) to obtain a sample solution.

Measurement Method

Standard sample for measurement of molecular weight: polymethyl methacrylate
Detection method: RI (differential refractometer)

In the present specification, the "indentation hardness" and "indentation elastic modulus" are determined as follows.

Indentation Hardness and Indentation Elastic Modulus

The indentation hardness ($H_{IT}$; indentation hardness) of a sample is measured using an ENT-2100 ultra-fine hardness tester produced by Nanotec Corporation. The indentation elastic modulus is also measured at the same time. The test is performed by adjusting the indentation depth to be 1/10 or less of the thickness. Specifically, the indentation hardness and indentation elastic modulus are values determined by the method described in a specific example of the present disclosure.

In the present specification, the "total light transmittance" and "haze" are determined as follows.

Measurement Method for Total Light Transmittance and Haze

The total light transmittance and haze are measured using an NDH 7000SPII haze meter (produced by Nippon Denshoku Industries Co., Ltd.) in accordance with JIS K7136 (haze value) and JIS K7361-1 (total light transmittance). A film with an average film thickness of 100 μm is used as the sample to be measured. Specifically, the total light

transmittance and haze are values determined by the method described in a specific example of the present disclosure.

In the present specification, the "transmittance" at each wavelength is determined as follows.

Transmittance at Each Wavelength

The transmittance at a specific wavelength of a sample is measured using a Hitachi U-4100 spectrophotometer. A film with an average film thickness of 100 μm is used as the sample. An integrating sphere detector is used as the detector. Specifically, the transmittance is a value determined by the method described in a specific example of the present disclosure.

In the present specification, the "refractive index" is determined as follows.

Refractive Index

The refractive index of a sample at 23°C is measured with an Abbe refractive index meter (NAR-1T SOLID, produced by Atago Co., Ltd.). The wavelength is a wavelength approximate to D-line because of the use of the LED attached to the device. Specifically, the refractive index is a value determined by the method described in a specific example of the present disclosure.

In the present specification, the "Abbe rate" at each wavelength is determined as follows.

Abbe Number

**[0052]** The Abbe number of a sample at 23°C is measured with an Abbe refractive index meter (NAR-1T SOLID, produced by Atago Co., Ltd.). Specifically, the Abbe number is a value determined by the method described in specific examples of the present disclosure.

In the present specification, the "reflectance" is determined as follows.

Reflectance

An absolute specular reflector is attached to a Hitachi U-4100 spectrophotometer, and the reflectance at 550 nm at 5° is measured. Specifically, the reflectance is a value determined by the method described in a specific example of the present disclosure.

In the present specification, the "water absorption" is determined as follows.

Water Absorption (24°C)

The weight of a sample that has been thoroughly dried beforehand is measured and set as W0. The sample is then completely immersed in water at 24°C that is 100 times or greater than W0 by mass. The weight of the sample after 24 hours is measured and set as W24. The water absorption is determined according to the following formula.

$$\text{Water absorption (\%)} = 100 \times (W24 - W0)/W0$$

Specifically, the water absorption is a value determined by the method described in a specific example of the present disclosure.

Water Absorption (60°C)

The weight of a sample that has been thoroughly dried beforehand is measured and set as W0, and then completely immersed in water at 60°C that is 100 times or greater than W0 by mass. The weight of the sample after 24 hours is measured and set as W24. The water absorption is determined according to the following formula.

$$\text{Water absorption (\%)} = 100 \times (W24 - W0)/W0$$

Specifically, the water absorption is a value determined by the method described in a specific example of the present disclosure.

In the present specification, the "tensile elastic modulus" is determined as follows.

Tensile Elastic Modulus

A sample (length: 30 mm, width: 5 mm, thickness: 0.1 mm) is measured with a DVA220 dynamic viscoelasticity measurement device produced by IT Measurement Control Co., Ltd., under the conditions of a tensile mode, a grip width of 20 mm, a measurement temperature of 25°C to 150°C, a temperatureincreasing rate of 2°C/min, and a frequency of 1 Hz. The elastic modulus value at 25°C is defined as a tensile elastic modulus. Specifically, the tensile elastic modulus is a value determined by the method described in a specific example of the present disclosure.
In the present specification, the "tensile strength" is determined as follows.

Tensile Strength

The tensile strength of a sample is measured using an AGS-100NX autograph produced by Shimadzu Corporation. The sample is cut into a dumbbell shape 5B as stated in JIS K 7162. The measurement is performed under the conditions of a chuck-to-chuck distance of 12 mm, a crosshead speed of 1 mm/min, and room temperature. Specifically, the tensile strength is a value determined by the method described in a specific example of the present disclosure.
In the present specification, the "thermal decomposition temperature" is determined as follows.

Thermal Decomposition Temperature

The temperatures at which the mass loss percentage of a sample becomes 0.1% and 5% are measured at a temperatureincreasing rate of 10°C/minute in an air atmosphere using a thermogravimetric-differential thermal analyzer (Hitachi High-Tech Science Corporation; STA7200). Specifically, the thermal decomposition temperature is a value determined by the method described in a specific example of the present disclosure.
In the present specification, the "glass transition temperature" is determined as follows.

Glass Transition Temperature (Tg)

The temperature is increased (first run), decreased, and then increased (second run) at 10°C/minute in the temperature range of 30°C or higher and 200°C or lower using a DSC (differential scanning calorimeter; Hitachi High-Tech Science Corporation, DSC7000); the midpoint of the endothermic curve in the second run is determined to be the glass transition temperature (°C). Specifically, the glass transition temperature is a value determined by the method described in a specific example of the present disclosure.
In the present specification, the "coefficient of linear expansion" is determined as follows.

Coefficient of Linear Expansion

The temperature of a sample is increased from room temperature to 150°C (1st up), decreased to room temperature, and then increased to 150°C (2nd up) at 2°C/minute using a thermomechanical analyzer (TMA8310; produced by Rigaku Corporation). The average coefficient of linear expansion at 25°C or higher and 80°C or lower in the 2nd up is determined and defined as the coefficient of linear expansion. Specifically, the coefficient of linear expansion is a value determined by the method described in a specific example of the present disclosure.
In the present specification, unless otherwise specified, examples of "alkyl" include linear or branched $C_1$-$C_{10}$ alkyl, such as methyl, ethyl, propyl, isopropyl, butyl, isobutyl, sec-butyl, tert-butyl, pentyl, isopentyl, neopentyl, hexyl, heptyl, octyl, nonyl, and decyl.
In the present specification, unless otherwise specified, "fluoroalkyl" is alkyl in which at least one hydrogen atom is replaced with a fluorine atom. "Fluoroalkyl" can be linear or branched fluoroalkyl.
The number of carbon atoms in "fluoroalkyl" can be, for example, 1 to 12, 1 to 6, 1 to 5, 1 to 4, 1 to 3, 6, 5, 4, 3, 2, or 1.
The number of fluorine atoms in "fluoroalkyl" can be 1 or more (e.g., 1 to 3, 1 to 5, 1 to 9, 1 to 11, or 1 to the maximum substitutable number).
"Fluoroalkyl" includes perfluoroalkyl.
"Perfluoroalkyl" is alkyl in which all hydrogen atoms are replaced with fluorine atoms.
Examples of perfluoroalkyl include trifluoromethyl ($CF_3$-), pentafluoroethyl ($C_2F_5$-), heptafluoropropyl ($CF_3CF_2CF_2$-), and heptafluoroisopropyl ($(CF_3)_2CF$-).
Specific examples of "fluoroalkyl" include monofluoromethyl, difluoromethyl, trifluoromethyl ($CF_3$-), 2,2,2-trifluoroethyl ($CF_3CH_2$-), perfluoroethyl ($C_2F_5$-), tetrafluoropropyl (e.g., $HCF_2CF_2CH_2$-), hexafluoropropyl (e.g., $(CF_3)_2CH$-), perfluorobutyl (e.g., $CF_3CF_2CF_2CF_2$-), octafluoropentyl (e.g., $HCF_2CF_2CF_2CF_2CH_2$-), perfluoropentyl (e.g., $CF_3CF_2CF_2CF_2CF_2$-), perfluorohexyl (e.g., $CF_3CF_2CF_2CF_2CF_2CF_2$-), and the like.
In the present specification, unless otherwise specified, "alkoxy" can be a group represented by RO-, wherein

R is alkyl (e.g., $C_1$-$C_{10}$ alkyl).

Examples of "alkoxy" include linear or branched $C_1$-$C_{10}$ alkoxy, such as methoxy, ethoxy, propoxy, isopropoxy, butoxy, isobutoxy, sec-butoxy, tert-butoxy, pentyloxy, isopentyloxy, neopentyloxy, hexyloxy, heptyloxy, octyloxy, nonyloxy, and decyloxy.

In the present specification, unless otherwise specified, "fluoroalkoxy" is alkoxy in which at least one hydrogen atom is replaced with a fluorine atom. "Fluoroalkoxy" can be linear or branched fluoroalkoxy.

The number of carbon atoms in "fluoroalkoxy" can be, for example, 1 to 12, 1 to 6, 1 to 5, 1 to 4, 1 to 3, 6, 5, 4, 3, 2, or 1.

The number of fluorine atoms in "fluoroalkoxy" can be 1 or more (e.g., 1 to 3, 1 to 5, 1 to 9, 1 to 11, or 1 to the maximum substitutable number).

"Fluoroalkoxy" includes perfluoroalkoxy.

"Perfluoroalkoxy" is alkoxy in which all hydrogen atoms are replaced with fluorine atoms.

Examples of "perfluoroalkoxy" include trifluoromethoxy ($CF_3O$-), pentafluoroethoxy ($C_2F_5O$-), heptafluoropropoxy ($CF_3CF_2CF_2O$-), and heptafluoroisopropoxy ($(CF_3)_2CFO$-).

Specific examples of "fluoroalkoxy" include monofluoromethoxy, difluoromethoxy, trifluoromethoxy, 2,2,2-trifluoroethoxy ($CF_3CH_2O$-), perfluoroethoxy ($C_2F_5O$-), tetrafluoropropyloxy (e.g. $HCF_2CF_2CH_2O$-), hexafluoropropyloxy (e.g., $(CF_3)_2CHO$-), perfluorobutyloxy (e.g., $CF_3CF_2CF_2CF_2O$-), octafluoropentyloxy (e.g., $HCF_2CF_2CF_2CF_2CH_2O$-), perfluoropentyloxy (e.g., $CF_3CF_2CF_2CF_2CF_2O$-), perfluorohexyloxy (e.g., $CF_3CF_2CF_2CF_2CF_2CF_2O$-), and the like.

Protective Display Film

One embodiment of the present disclosure is a protective display film comprising a specific fluoropolymer.

The protective display film has high hardness by comprising the fluoropolymer described above.

The protective display film has high scratch resistance by comprising the fluoropolymer described above.

The protective display film has low reflectance by comprising the fluoropolymer described above.

The protective display film has high transparency by comprising the fluoropolymer described above.

The protective display film has low water absorption by comprising the fluoropolymer described above.

The fluoropolymer of the protective display film comprises, as a main component, a monomer unit represented by formula (1):

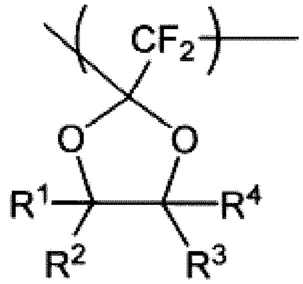

(1)

wherein $R^1$ to $R^4$ are each independently a fluorine atom, a fluoroalkyl group, or a fluoroalkoxy group (this monomer unit may be referred to as "unit (1)" in the present specification).

In the present specification, phrases such as "comprising a monomer unit as a main component" mean that the percentage of the specific monomer unit is 50 mol% or more based on the total monomer units in a polymer.

Unit (1) as a monomer unit constituting the fluoropolymer may be used singly or in a combination of two or more.

The percentage of unit (1) may be, for example, 70 mol% or more, preferably 80 mol% or more, more preferably 90 mol% or more, and particularly preferably 100 mol%, based on the total monomer units of the fluoropolymer.

In each of $R^1$ to $R^4$, fluoroalkyl can be, for example, linear or branched $C_1$-$C_5$ fluoroalkyl, linear or branched $C_1$-$C_4$ fluoroalkyl, linear or branched $C_1$-$C_3$ fluoroalkyl, or $C_1$-$C_2$ fluoroalkyl.

The linear or branched $C_1$-$C_5$ fluoroalkyl is preferably linear or branched $C_1$-$C_5$ perfluoroalkyl.

The linear or branched $C_1$-$C_4$ fluoroalkyl is preferably linear or branched $C_1$-$C_4$ perfluoroalkyl.

The linear or branched $C_1$-$C_3$ fluoroalkyl is preferably linear or branched $C_1$-$C_3$ perfluoroalkyl.

The $C_1$-$C_2$ fluoroalkyl group is preferably $C_1$-$C_2$ perfluoroalkyl.

In each of $R^1$ to $R^4$, fluoroalkoxy can be, for example, linear or branched $C_1$-$C_5$ fluoroalkoxy, linear or branched $C_1$-$C_4$ fluoroalkoxy, linear or branched $C_1$-$C_3$ fluoroalkoxy, or $C_1$-$C_2$ fluoroalkoxy.

The linear or branched $C_1$-$C_5$ fluoroalkoxy is preferably linear or branched $C_1$-$C_5$ perfluoroalkoxy.

The linear or branched $C_1$-$C_4$ fluoroalkoxy is preferably linear or branched $C_1$-$C_4$ perfluoroalkoxy.

The linear or branched $C_1$-$C_3$ fluoroalkoxy is preferably linear or branched $C_1$-$C_3$ perfluoroalkoxy.

The $C_1$-$C_2$ fluoroalkoxy is preferably $C_1$-$C_2$ perfluoroalkoxy.

$R^1$ to $R^4$ can be each independently fluorine, linear or branched $C_1$-$C_5$ fluoroalkyl, or linear or branched $C_1$-$C_5$ fluoroalkoxy.

$R^1$ to $R^4$ can be each independently fluorine, linear or branched $C_1$-$C_5$ perfluoroalkyl, or linear or branched $C_1$-$C_5$ perfluoroalkoxy.

$R^1$ to $R^4$ can be each independently fluorine, linear or branched $C_1$-$C_4$ fluoroalkyl, or linear or branched $C_1$-$C_4$ fluoroalkoxy.

$R^1$ to $R^4$ can be each independently fluorine, linear or branched $C_1$-$C_4$ perfluoroalkyl, or linear or branched $C_1$-$C_4$ perfluoroalkoxy.

$R^1$ to $R^4$ can be each independently fluorine, linear or branched $C_1$-$C_3$ fluoroalkyl, or linear or branched $C_1$-$C_3$ fluoroalkoxy.

$R^1$ to $R^4$ can be each independently fluorine, linear or branched $C_1$-$C_3$ perfluoroalkyl, or linear or branched $C_1$-$C_3$ perfluoroalkoxy.

$R^1$ to $R^4$ can be each independently fluorine, $C_1$-$C_2$ fluoroalkyl, or $C_1$-$C_2$ fluoroalkoxy.

$R^1$ to $R^4$ can be each independently fluorine, $C_1$-$C_2$ perfluoroalkyl, or $C_1$-$C_2$ perfluoroalkoxy.

$R^1$ to $R^4$ can be each independently fluorine, trifluoromethyl, pentafluoroethyl, or trifluoromethoxy.

At least one of $R^1$ to $R^4$ can be fluorine, and the other groups in $R^1$ to $R^4$ can be independently $C_1$-$C_2$ perfluoroalkyl or $C_1$-$C_2$ perfluoroalkoxy when two or more such other groups are present.

At least two of $R^1$ to $R^4$ can be fluorine, and the other groups in $R^1$ to $R^4$ can be independently $C_1$-$C_2$ perfluoroalkyl or $C_1$-$C_2$ perfluoroalkoxy when two or more such other groups are present.

At least three of $R^1$ to $R^4$ can be fluorine, and the other group in $R^1$ to $R^4$ can be $C_1$-$C_2$ perfluoroalkyl or $C_1$-$C_2$ perfluoroalkoxy.

At least three of $R^1$ to $R^4$ can be fluorine atoms, and the other group in $R^1$ to $R^4$ can be $C_1$-$C_2$ perfluoroalkyl.

$R^1$ to $R^4$ can be all fluorine atoms.

Unit (1) can be a monomer unit represented by the following formula (1-1) (this unit may be referred to as "unit (1-1)" in the present specification).

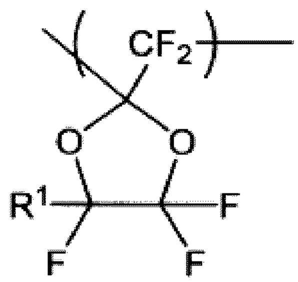

(1-1)

In the formula, $R^1$ is a fluorine atom, a fluoroalkyl group, or a fluoroalkoxy group.

Unit (1-1) as a monomer unit constituting the fluoropolymer may be used singly or in a combination of two or more.

In unit (1-1), $R^1$ can be fluorine, linear or branched $C_1$-$C_5$ fluoroalkyl, or linear or branched $C_1$-$C_5$ fluoroalkoxy.

In unit (1-1), $R^1$ can be fluorine, linear or branched $C_1$-$C_5$ perfluoroalkyl, or linear or branched $C_1$-$C_5$ perfluoroalkoxy.

In unit (1-1), $R^1$ can be fluorine, linear or branched $C_1$-$C_4$ fluoroalkyl, or linear or branched $C_1$-$C_4$ fluoroalkoxy.

In unit (1-1), $R^1$ can be fluorine, linear or branched $C_1$-$C_4$ perfluoroalkyl, or linear or branched $C_1$-$C_4$ perfluoroalkoxy.

In unit (1-1), $R^1$ can be fluorine, linear or branched $C_1$-$C_3$ fluoroalkyl, or linear or branched $C_1$-$C_3$ fluoroalkoxy.

In unit (1-1), $R^1$ can be fluorine, linear or branched $C_1$-$C_3$ perfluoroalkyl, or linear or branched $C_1$-$C_3$ perfluoroalkoxy.

In unit (1-1), $R^1$ can be fluorine, $C_1$-$C_2$ fluoroalkyl, or $C_1$-$C_2$ fluoroalkoxy.

In unit (1-1), $R^1$ can be fluorine, $C_1$-$C_2$ perfluoroalkyl, or $C_1$-$C_2$ perfluoroalkoxy.

In unit (1-1), $R^1$ can be fluorine, trifluoromethyl, pentafluoroethyl, or trifluoromethoxy.

In unit (1-1), $R^1$ can be $C_1$-$C_2$ perfluoroalkyl or $C_1$-$C_2$ perfluoroalkoxy.

In unit (1-1), $R^1$ can be $C_1$-$C_2$ perfluoroalkyl.

Preferred examples of unit (1-1) include a monomer unit represented by the following formula (1-11) (this monomer unit may be referred to as "unit (1-11)" in the present specification).

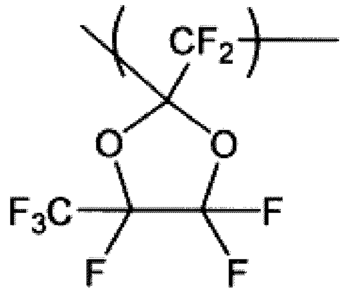

(1-11)

The fluoropolymer may comprise a fluoroolefin unit in addition to unit (1).
The fluoroolefin unit may be used singly or in a combination of two or more.
The percentage of the fluoroolefin unit can be 50 mol% or less, preferably 30 mol% or less, more preferably 20 mol% or less, even more preferably 10 mol% or less, and particularly preferably 0 mol%, based on the total monomer units.
The fluoroolefin unit is a monomer unit that is formed after polymerization of a monomer containing fluorine and a carbon-carbon double bond.
The atoms constituting the fluoroolefin unit may be only fluorine, halogen other than fluorine, carbon, hydrogen, and oxygen.
The atoms constituting the fluoroolefin unit may be only fluorine, halogen other than fluorine, carbon, and hydrogen.
The atoms constituting the fluoroolefin unit may be only fluorine, carbon, and hydrogen.
The atoms constituting the fluoroolefin unit may be only fluorine and carbon.
The fluoroolefin unit includes at least one unit selected from the group consisting of a fluorine-containing perhaloolefin unit, a vinylidene fluoride unit ($-CH_2-CF_2-$), a trifluoroethylene unit ($-CFH-CF_2-$), a pentafluoropropylene unit ($-CFH-CF(CF_3)-$, $-CF_2-CF(CHF_2)-$), a 1,1,1,2-tetrafluoro-2-propylene unit ($-CH_2-CF(CF_3)-$), and the like.
The fluorine-containing perhaloolefin unit is a monomer unit that is formed after polymerization of a monomer containing fluorine and a carbon-carbon double bond, and optionally halogen other than fluorine.
The fluorine-containing perhaloolefin unit includes at least one member selected from the group consisting of a chlorotrifluoroethylene unit ($-CFCl-CF_2-$), a tetrafluoroethylene unit ($-CF_2-CF_2-$), a hexafluoropropylene unit ($-CF_2-CF(CF_3)-$), a perfluoro (methyl vinyl ether) unit ($-CF_2-CF(OCF_3)-$), a perfluoro (ethyl vinyl ether) unit ($-CF_2-CF(OC_2F_5)-$), perfluoro (propyl vinyl ether) unit ($-CF_2-CF(OCF_2C_2F_5)-$), perfluoro (butyl vinyl ether) unit ($-CF_2-CF(O(CF_2)_2C_2F_5)-$), and a perfluoro(2,2-dimethyl-1,3-dioxol) unit (-CF-CAF- (wherein A represents a perfluorodioxolane ring formed with the adjacent carbon atom shown in the formula, with two trifluoromethyl bonded to the carbon atom at position 2 of the dioxolane ring).
The fluoroolefin unit includes at least one member selected from the group consisting of a chlorotrifluoroethylene unit, a tetrafluoroethylene unit, a hexafluoropropylene unit, a perfluoro(methyl vinyl ether) unit, and a perfluoro(propyl vinyl ether) unit.
The fluoropolymer may further contain one or more other monomer units in addition to unit (1) and the fluoroolefin unit. However, it is preferable to contain no other monomer units.
The other monomer units include $CH_2=CHRf$ (wherein Rf represents a $C_1-C_{10}$ fluoroalkyl group) units, alkyl vinyl ether units (e.g., a cyclohexyl vinyl ether unit, ethyl vinyl ether unit, butyl vinyl ether unit, and methyl vinyl ether unit), alkenyl vinyl ether units (e.g., a polyoxyethylene allyl ether unit and ethyl allyl ether unit), organosilicon compound units having a reactive $\alpha,\beta$-unsaturated group (e.g., a vinyltrimethoxysilane unit, vinyltriethoxysilane unit, and a vinyltris(methoxyethoxy)silane unit), acrylic ester units (e.g., a methyl acrylate unit and ethyl acrylate unit), methacrylic ester units (e.g., a methyl methacrylate unit and ethyl methacrylate unit), vinyl ester units (e.g., a vinyl acetate unit, vinyl benzoate unit, and a VeoVA (vinyl ester produced by Shell plc) unit), and the like.
The percentage of the other monomer units may be, for example, 0 mol% or more and 20 mol% or less, or 0 mol% or more and 10 mol% or less, based on the total monomer units.
The fluoropolymer preferably has a glass transition temperature (Tg) of 110°C or higher, more preferably 110°C or higher and 300°C or lower, even more preferably 120°C or higher and 300°C or lower, and particularly preferably 125°C or higher and 200°C or lower. A glass transition temperature within these ranges is advantageous in terms of high bending durability of the protective display film in, for example, a flexible display comprising a protective display film.
The fluoropolymer has a mass average molecular weight of, for example, 10,000 or more and 1,000,000 or less, preferably 30,000 or more and 500,000 or less, and more preferably 50,000 or more and 300,000 or less. A molecular weight within these ranges is advantageous in terms of durability.
A fluoropolymer can be produced, for example, by polymerizing one or more monomers corresponding to one

or more monomer units constituting the fluoropolymer by an appropriate polymerization method. For example, a fluoropolymer can be produced by polymerizing one or more monomers corresponding to unit (1).

A fluoropolymer can also be produced by polymerizing one or more monomers corresponding to unit (1), optionally with at least one monomer selected from the group consisting of fluoroolefins and other monomers.

A person skilled in the art would be able to understand monomers corresponding to the monomer units constituting a fluoropolymer. For example, a monomer corresponding to unit (1) is a compound represented by formula (M1):

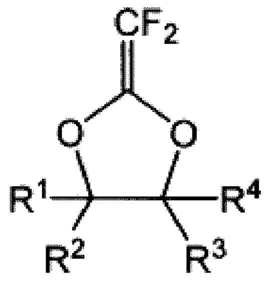

(M1)

wherein $R^1$ to $R^4$ are as defined above (this compound may be referred to as "monomer (M1)" in the present specification).

For example, a monomer corresponding to unit (1-1) is a compound represented by formula (M1-1):

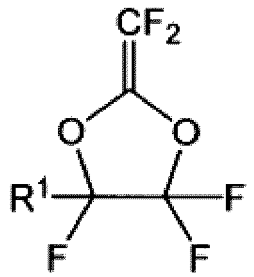

(M1-1)

wherein $R^1$ is a fluorine atom, a fluoroalkyl group, or a fluoroalkoxy group (this compound may be referred to as "monomer (M1-1)" in the present specification).

For example, the monomer corresponding to unit (1-11) is a compound represented by formula (M1-11):

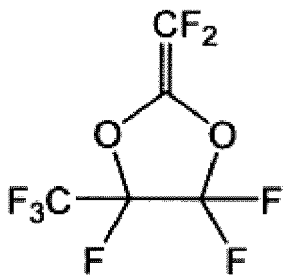

(M1-11)

(this compound may be referred to as "monomer (M1-11)" in the present specification).

The fluoroolefins for use may be monomers corresponding to the fluoroolefin units mentioned above. For example, the monomers corresponding to the tetrafluoroethylene unit, hexafluoropropylene unit, and vinylidene fluoride unit are tetrafluoroethylene ($CF_2$=$CF_2$), hexafluoropropylene ($CF_3CF$=$CF_2$), and vinylidene fluoride ($CH_2$=$CF_2$), respectively. Thus, the details regarding fluoroolefins would be able to be understood by a person skilled in the art from the description of the corresponding fluoroolefin units.

For example, the fluoroolefin may be at least one member selected from the group consisting of fluorine-containing perhaloolefins, vinylidene fluoride, trifluoroethylene, pentafluoropropylene, and 1,1,1,2-tetrafluoro-2-propylene. Preferably, the fluoroolefin may be at least one member selected from the group consisting of chlorotrifluoroethylene, tetrafluoroethylene, hexafluoropropylene, perfluoro(methyl vinyl ether), and perfluoro(propyl vinyl ether).

The fluorine-containing perhaloolefin may be at least one member selected from the group consisting of chlorotrifluoroethylene, tetrafluoroethylene, hexafluoropropylene, perfluoro(methyl vinyl ether), perfluoro(ethyl vinyl ether), perfluoro(propyl vinyl ether), perfluoro(butyl vinyl ether), and perfluoro(2,2-dimethyl-1,3-dioxol) .

The other monomers for use may be monomers corresponding to the other monomer units mentioned above.

Thus, the details regarding the other monomers would be able to be understood by a person skilled in the art from the description of the corresponding other monomer units.

The polymerization method includes, for example, a method of using appropriate amounts of monomers corresponding to the monomer units that constitute the fluoropolymer, with the monomers being optionally dissolved or dispersed in a solvent (e.g., an aprotic solvent) and a polymerization initiator being optionally added, and performing polymerization (e.g., radical polymerization, bulk polymerization, solution polymerization, suspension polymerization, dispersion polymerization, or emulsion polymerization).

The polymerization method is preferably solution polymerization because solution polymerization can produce a high-concentration solution of the fluoropolymer and thereby achieve a high manufacturing yield, and is advantageous for the formation of a thick film and purification. Therefore, the fluoropolymer is preferably produced by solution polymerization. The fluoropolymer is more preferably produced by solution polymerization in which one or more monomers are polymerized in the presence of an aprotic solvent.

The solvent for use in solution polymerization of the fluoropolymer is preferably an aprotic solvent. The amount of aprotic solvent for use in the production of the fluoropolymer is, for example, 80 mass% or less, less than 80 mass%, 75 mass% or less, 70 mass% or less, 35 mass% or more and 95 mass% or less, 35 mass% or more and 90 mass% or less, 35 mass% or more and 80 mass% or less, 35 mass% or more and 70 mass% or less, 35 mass% or more and less than 70 mass%, or 60 mass% or more and 80 mass% or less, based on the sum of the mass of the monomers and the mass of the solvent. The amount can be preferably 35 mass% or more and less than 80 mass%, more preferably 40 mass% or more and 75 mass% or less, and particularly preferably 50 mass% or more and 70 mass% or less.

The aprotic solvent for use in the polymerization of fluoropolymers can be, for example, at least one member selected from the group consisting of perfluoroaromatic compounds, perfluorotrialkylamines, perfluoroalkanes, hydrofluorocarbons, perfluorocyclic ethers, hydrofluoroethers, and olefin compounds containing at least one chlorine atom.

The perfluoroaromatic compound is, for example, a perfluoroaromatic compound optionally having one or more perfluoroalkyl groups. The aromatic ring of the perfluoroaromatic compound can be at least one ring selected from the group consisting of a benzene ring, a naphthalene ring, and an anthracene ring. The perfluoroaromatic compound can have one or more (e.g., one, two, or three) aromatic rings.

The perfluoroalkyl group as a substituent is, for example, linear or branched, $C_1$-$C_6$, $C_1$-$C_5$, or $C_1$-$C_4$ perfluoroalkyl, and preferably linear or branched $C_1$-$C_3$ perfluoroalkyl.

The number of substituents is, for example, one to four, preferably one to three, and more preferably one or two. When a plurality of substituents are present, the substituents may be the same or different.

Examples of perfluoroaromatic compounds include perfluorobenzene, perfluorotoluene, perfluoroxylene, and perfluoronaphthalene.

Preferred examples of perfluoroaromatic compounds include perfluorobenzene and perfluorotoluene.

The perfluorotrialkylamine is, for example, an amine substituted with three linear or branched perfluoroalkyl groups. The number of carbon atoms of each perfluoroalkyl group is, for example, 1 to 10, preferably 1 to 5, and more preferably 1 to 4. The perfluoroalkyl groups can be the same or different, and are preferably the same.

Examples of perfluorotrialkylamines include perfluorotrimethylamine, perfluorotriethylamine, perfluorotripropylamine, perfluorotriisopropylamine, perfluorotributylamine, perfluorotri-sec-butylamine, perfluorotri-tert-butylamine, perfluorotripentylamine, perfluorotriisopentylamine, and perfluorotrineopentylamine.

Preferred examples of perfluorotrialkylamines include perfluorotripropylamine and perfluorotributylamine.

The perfluoroalkane is, for example, a linear, branched, or cyclic $C_3$-$C_{12}$ (preferably $C_3$-$C_{10}$, more preferably $C_3$-$C_6$) perfluoroalkane.

Examples of perfluoroalkanes include perfluoropentane, perfluoro-2-methylpentane, perfluorohexane, perfluoro-2-methylhexane, perfluoroheptane, perfluorooctane, perfluorononane, perfluorodecane, perfluorocyclohexane, perfluoro(methylcyclohexane), perfluoro(dimethylcyclohexane) (e.g., perfluoro(1,3-dimethylcyclohexane)), and perfluorodecalin.

Preferred examples of perfluoroalkanes include perfluoropentane, perfluorohexane, perfluoroheptane, and perfluorooctane.

The hydrofluorocarbon is, for example, a $C_3$-$C_8$ hydrofluorocarbon. Examples of hydrofluorocarbons include $CF_3CH_2CF_2H$, $CF_3CH_2CF_2CH_3$, $CF_3CHFCHFC_2F_5$, 1,1,2,2,3,3,4-heptafluorocyclopentane, $CF_3CF_2CF_2CF_2CH_2CH_3$, $CF_3CF_2CF_2CF_2CF_2CHF_2$, and $CF_3CF_2CF_2CF_2CF_2CF_2CH_2CH_3$.

Preferred examples of hydrofluorocarbons include $CF_3CH_2CF_2H$ and $CF_3CH_2CF_2CH_3$.

The perfluorocyclic ether is, for example, a perfluorocyclic ether optionally having one or more perfluoroalkyl groups. The ring of the perfluorocyclic ether may be a 3- to 6-membered ring. The ring of the perfluorocyclic ether may have one or more oxygen atoms as a ring-constituting atom. The ring preferably has one or two oxygen atoms, and more preferably one oxygen atom.

The perfluoroalkyl group as a substituent is, for example, linear or branched $C_1$-$C_6$, $C_1$-$C_5$, or $C_1$-$C_4$ perfluoroalkyl. The perfluoroalkyl group is preferably linear or branched $C_1$-$C_3$ perfluoroalkyl.

The number of substituents is, for example, one to four, preferably one to three, and more preferably one or two. When a plurality of substituents are present, they may be the same or different.

Examples of perfluorocyclic ethers include perfluorotetrahydrofuran, perfluoro-5-methyltetrahydrofuran, perfluoro-5-ethyltetrahydrofuran, perfluoro-5-propyltetrahydrofuran, perfluoro-5-butyltetrahydrofuran, and perfluorotetrahydropyran.

Preferred examples of perfluorocyclic ethers include perfluoro-5-ethyltetrahydrofuran and perfluoro-5-butyltetrahydrofuran.

The hydrofluoroether is, for example, a fluorine-containing ether.

The hydrofluoroether preferably has a global warming potential (GWP) of 400 or less, and more preferably 300 or less.

Examples of hydrofluoroethers include $CF_3CF_2CF_2CF_2OCH_3$, $CF_3CF_2CF(CF_3)OCH_3$, $CF_3CF(CF_3)CF_2OCH_3$, $CF_3CF_2CF_2CF_2OC_2H_5$, $CF_3CH_2OCF_2CHF_2$, $C_2F_5CF(OCH_3)C_3F_7$, $(CF_3)_2CHOCH_3$, $(CF_3)_2CFOCH_3$, $CHF_2CF_2OCH_2CF_3$, $CHF_2CF_2CH_2OCF_2CHF_2$, $CF_3CHFCF_2OCH_3$, $CF_3CHFCF_2OCF_3$, trifluoromethyl 1,2,2,2-tetrafluoroethyl ether (HFE-227me), difluoromethyl 1,1,2,2,2-pentafluoroethyl ether (HFE-227mc), trifluoromethyl 1,1,2,2-tetrafluoroethyl ether (HFE-227pc), difluoromethyl 2,2,2-trifluoroethyl ether (HFE-245mf), 2,2-difluoroethyltrifluoromethyl ether (HFE-245pf), 1,1,2,3,3,3-hexafluoropropylmethyl ether ($CF_3CHFCF_2$ $OCH_3$), 1,1,2,2-tetrafluoroethyl 2,2,2-trifluoroethyl ether ($CHF_2CF_2OCH_2CF_3$), and 1,1,1,3,3,3-hexafluoro-2-methoxypropane $(CF_3)_2CHOCH_3$).

Preferred examples of hydrofluoroethers include $CF_3CF_2CF_2CF_2OCH_3$, $CF_3CF_2CF_2CF_2OC_2H_5$, $CF_3CH_2OCF_2CHF_2$, and $C_2F_5CF(OCH_3)C_3F_7$.

The hydrofluoroether is preferably a compound represented by the following formula (B1):

$$R^{21}\text{-O-}R^{22} \qquad \text{(B1)},$$

wherein $R^{21}$ is linear or branched perfluorobutyl and $R^{22}$ is methyl or ethyl.

The olefin compound containing at least one chlorine atom is a $C_2$-$C_4$ (preferably $C_2$-$C_3$) olefin compound containing at least one chlorine atom in its structure. The olefin compound containing at least one chlorine atom is a compound in which at least one of the hydrogen atoms bonded to the carbon atoms in a $C_2$-$C_4$ hydrocarbon having one or two (preferably one) carbon-carbon double bonds (C=C) is replaced with chlorine. A compound in which at least one of the hydrogen atoms bonded to two carbon atoms constituting the carbon-carbon double bond in a $C_2$-$C_4$ hydrocarbon is replaced with chlorine is preferred.

The number of chlorine atoms is one to the maximum substitutable number. The number of chlorine atoms may be, for example, one, two, three, four, or five.

The olefin compound containing at least one chlorine atom may contain at least one (e.g., one, two, three, four, or five) fluorine atom.

Examples of olefin compounds containing at least one chlorine atom include $CH_2$=CHCl, CHCl=CHCl, $CCl_2$=CHCl, $CCl_2$=$CCl_2$, $CF_3CH$=CHCl, $CHF_2CF$=CHCl, $CFH_2CF$=CHCl, $CF_3CCl$=CFCl, $CF_2HCl$=CFCl, and $CFH_2Cl$=CFCl.

Preferred examples of olefin compounds containing at least one chlorine atom include CHCl=CHCl, $CHF_2CF$=CHCl, $CF_3CH$=CHCl, and $CF_3CCl$=CFCl.

As the aprotic solvent, a hydrofluoroether is preferable because it has less environmental impact during use and polymers can be dissolved at high concentrations in it.

Preferred examples of polymerization initiators used in production of the fluoropolymer include di-n-propyl peroxydicarbonate, diisopropyl peroxydicarbonate, diisobutyryl peroxide, di(ω-hydro-dodecafluoroheptanoyl)peroxide, di(ω-hydro-hexadecafluorononanoyl)peroxide, ω-hydro-dodecafluoroheptanoyl-ω-hydro-hexadecafluorononanoyl-peroxide, benzoyl peroxide, tert-butyl peroxypivalate, tert-hexyl peroxypivalate, ammonium persulfate, sodium persulfate, and potassium persulfate.

Particularly preferred examples of polymerization initiators include di-n-propyl peroxydicarbonate, diisopropyl peroxydicarbonate, diisobutyryl peroxide, di(ω-hydro-dodecafluoroheptanoyl)peroxide, benzoyl peroxide, tert-butyl peroxypivalate, tert-hexyl peroxypivalate, and ammonium persulfate.

The amount of the polymerization initiator for use in the polymerization reaction can be, for example, 0.0001 g or more and 0.05 g or less, preferably 0.0001 g or more and 0.01 g or less, and more preferably 0.0005 g or more and 0.008 g or less, per gram of all of the monomers subjected to the reaction.

The temperature of the polymerization reaction can be, for example, -10°C or higher and 160°C or lower, preferably 0°C or higher and 160°C or lower, and more preferably 0°C or higher and 100°C or lower.

The reaction time for the polymerization reaction is preferably 0.5 hours or more and 72 hours or less, more preferably 1 hour or more and 48 hours or less, and even more preferably 3 hours or more and 30 hours or less.

The polymerization reaction can be performed in the presence or absence of an inert gas (e.g., nitrogen gas), and preferably in the presence of an inert gas.

The polymerization reaction can be performed under reduced pressure, atmospheric pressure, or increased

pressure.

The polymerization reaction can be performed by adding one or more monomers to an aprotic solvent containing a polymerization initiator and subjecting it to polymerization conditions. The polymerization reaction can also be performed by adding a polymerization initiator to an aprotic solvent containing one or more monomers and subjecting it to polymerization conditions.

The fluoropolymer produced by the polymerization reaction may be purified, if desired, by a conventional method, such as extraction, dissolution, concentration, filtration, precipitation, reprecipitation, dehydration, adsorption, or chromatography, or a combination of these methods. Alternatively, a solution of the fluoropolymer produced by the polymerization reaction, a dilute solution thereof, or a mixture of the solution with other optional components or the like may be dried or heated (e.g., 30°C or higher and 150°C or lower) to form a protective display film containing the fluoropolymer.

The content of the fluoropolymer in the protective display film can be, for example, 50 mass% or more and 100 mass% or less, preferably 60 mass% or more and 100 mass% or less, more preferably 80 mass% or more and 100 mass% or less, and particularly preferably 90 mass% or more and 100 mass% or less, based on the total mass of the protective display film.

The protective display film may comprise other components in addition to the fluoropolymer. Such other components may be known components according to the use of the protective display film, such as colorants, light-diffusing agents, various fillers (e.g., conductivity-imparting fillers), plasticizers, viscosity modifiers, flexibilizers, light-resistant stabilizers, reaction inhibitors, and adhesion promoters.

The protective display film may comprise other components in appropriate amounts as long as the effects of the present disclosure are obtained. The content of the other components can be, for example, 0 mass% or more and 50 mass% or less, preferably 0 mass% or more and 40 mass% or less, more preferably 0 mass% or more and 20 mass% or less, and particularly preferably 0 mass% or more and 10 mass% or less, based on the total mass of the protective display film.

The protective display film can be produced, for example, by drying or heating a liquid obtained by dissolving or dispersing the fluoropolymer in a solvent to thus remove the solvent from the liquid. Preferably, the protective display film can be produced by removing the solvent from the coating agent of the present disclosure described below.

The thickness of the protective display film can be appropriately selected according to the required function etc. of the film. The thickness can be, for example, 10 nm or more, 10 nm or more and 1000 μm or less, 30 nm or more and 500 μm or less, or 50 nm or more and 500 μm or less, and preferably 100 nm or more and 500 μm or less, more preferably 500 nm or more and 300 μm or less, even more preferably 800 nm or more and 200 μm or less, and particularly preferably 10 nm or more and 200 μm or less. An average film thickness within these ranges is advantageous in terms of durability.

The protective display film, which comprises the fluoropolymer, has high indentation hardness and thus has excellent scratch resistance. The indentation hardness of the protective display film can be, for example, 250 $N/mm^2$ or more and 1000 $N/mm^2$ or less, preferably 300 $N/mm^2$ or more and 800 $N/mm^2$ or less, and more preferably 350 $N/mm^2$ or more and 600 N.

The indentation elastic modulus of the protective display film can be, for example, 2.5 GPa or more and 10 GPa or less, preferably 2.5 GPa or more and 8 GPa or less, and more preferably 2.5 GPa or more and 6 GPa or less.

Since the fluoropolymer has high permeability, the protective display film can be used as an optical material. The total light transmittance of the protective display film can be, for example, 90% or more and 99% or less, preferably 92% or more and 99% or less, and more preferably 94% or more and 99%& or less.

Since the fluoropolymer also has high ultraviolet transmittance, the protective display film can also be used as an optical material for ultraviolet light. The transmittance of the protective display film at 193 nm or more and 410 nm or less can be, for example, 60% or more and preferably 70% or more.

The refractive index of the protective display film can be, for example, 1.25 or more and 1.4 or less, preferably 1.29 or more and 1.37 or less, and more preferably 1.3 or more and 1.36 or less.

The Abbe number of the protective display film can be, for example, 80 or more and 100 or less, preferably 85 or more and 96 or less, and more preferably 87 or more and 94 or less.

The water absorption (24°C) of the protective display film can be, for example, 0.1% or less, preferably 0.05% or less, and more preferably 0.01%.

The protective display film has high hardness, excellent light permeability, etc. and is thus capable of protecting the display surface when provided on the surface of a display.

## Display

One embodiment of the present disclosure is a display comprising the protective display film. The type of display is not limited as long as the protective display film is applicable. The display includes not only displays designed to

display images, such as liquid crystal displays, plasma displays, organic EL displays, and projectors, but also displays designed to transfer information by displaying letters, numbers, etc.

The details of the protective display film for displays are as described above.

## Coating Agent

One embodiment of the present disclosure is a coating agent for forming a protective display film comprising a specific fluoropolymer.

The coating agent may comprise a fluoropolymer and an aprotic solvent.

The fluoropolymer in the coating agent may be the fluoropolymer described above for the protective display film. Therefore, the details of the fluoropolymer for the protective display film are applicable to the details of the fluoropolymer for the coating agent.

The content of the fluoropolymer in the coating agent can be, for example, 5 mass% or more and 65 mass% or less, 10 mass% or more and 65 mass% or less, 20 mass% or more and 65 mass% or less, 30 mass% or more and 65 mass% or less, more than 30 mass% and 65 mass% or less, or 20 mass% or more and 40 mass% or less, based on the total mass of the coating agent. The content is preferably more than 20 mass% and 65 mass% or less, more preferably 25 mass% or more and 60 mass% or less, and particularly preferably 30 mass% or more and 50 mass% or less.

The aprotic solvent in the coating agent may be the aprotic solvent described above for the protective display film. Therefore, the details of the aprotic solvent for the protective display film are applicable to the details of the aprotic solvent for the coating agent.

The content of the aprotic solvent in the coating agent can be, for example, 35 mass% or more and 95 mass% or less, 35 mass% or more and 90 mass% or less, 35 mass% or more and 80 mass% or less, 35 mass% or more and 70 mass% or less, 35 mass% or more and less than 70 mass%, or 60 mass% or more and 80 mass% or less, based on the total mass of the coating agent. The content is preferably 35 mass% or more and less than 80 mass%, more preferably 40 mass% or more and 75 mass% or less, and particularly preferably 50 mass% or more and 70 mass% or less.

The coating agent may comprise a polymerization initiator. The polymerization initiator for the coating agent may be the polymerization initiator described above for the protective display film. Therefore, the details of the polymerization initiator for the protective display film are applicable to the details of the polymerization initiator for the coating agent.

The content of the polymerization initiator in the coating agent is, for example, 0.00001 mass% or more and 10 mass% or less, preferably 0.00005 mass% or more and 10 mass% or less, and more preferably 0.0001 mass% or more and 10 mass% or less, based on the total mass of the coating agent.

The coating agent may comprise the fluoropolymer and an aprotic solvent, and optionally a polymerization initiator and optionally other components, in appropriate amounts. Examples of other components can include refractive index adjusters, various fillers (e.g., electrically conductive fillers), hardness-imparting agents, colorants, light-diffusing agents, plasticizers, viscosity modifiers, flexibilizers, light-resistant stabilizers, reaction inhibitors, and adhesion promoters. The content of the other components can be, for example, 0.01 mass% or more and 50 mass% or less, preferably 0.01 mass% or more and 30 mass% or less, more preferably 0.01 mass% or more and 20 mass% or less, based on the total mass of the coating agent.

The coating agent can be produced by mixing the fluoropolymer and an aprotic solvent, optionally with a polymerization initiator and optionally with other components.

The coating agent can be produced by mixing a polymerization reaction mixture obtained by the solution polymerization of fluoropolymer described above (this reaction mixture contains at least a fluoropolymer and an aprotic solvent) optionally with an aprotic solvent and/or other components.

When solution polymerization is performed, the fluoropolymer concentration or the amount of fluoropolymer dissolved in the polymerization reaction mixture can be increased, and the step of isolating the fluoropolymer from the polymerization reaction mixture can be omitted. For this reason, the coating agent preferably contains a polymerization reaction mixture obtained by solution polymerization.

In the coating agent, the content of the polymerization reaction mixture of solution polymerization can be appropriately selected according to the concentration of the fluoropolymer in the polymerization reaction mixture and the functions, thickness, etc. of the film to be produced. The content of the polymerization reaction mixture of solution polymerization in the coating agent can be, for example, 5 mass% or more and 100 mass% or less, preferably 20 mass% or more and 100 mass% or less, and more preferably 30 mass% or more and 100 mass% or less, based on the total mass of the coating agent.

The coating agent comprising an aprotic solvent in which the fluoropolymer is dissolved or dispersed can form a film, for example, by applying the agent to a portion in which the formation of protective film is required by an appropriate method (e.g., spray coating, dip coating, bar coating, gravure coating, roll coating, ink jet, spin coating), and then removing the solvent by drying, heating, etc. After application of the coating agent, heating is preferably performed. The drying or

heating temperature is, for example, 30°C or higher and 150°C or lower, and preferably 30°C or higher and 80°C or lower.

For example, a film can be formed by applying the coating agent of the present disclosure, followed by drying in a dryer at 80°C. Alternatively, after a fluoropolymer film is formed by applying the coating agent of the present disclosure, one or more other components etc. that constitute a display can be formed on this film.

Although embodiments are described above, it can be understood that various modifications in form and details may be made without departing from the spirit and scope of the claims.

## Examples

An embodiment of the present disclosure is described in more detail below with Examples; however, the present disclosure is not limited to these.

The symbols and abbreviations in the Examples are used with the following meanings.

Initiator solution (1): a methanol solution containing 50 mass% di-n-propyl peroxydicarbonate (10-hour half-life temperature: 40°C)
Fluoropolymer (1-11): a polymer composed of unit (1-11)
Mw: mass average molecular weight

### GPC Analysis Method (Measurement of Mass Average Molecular Weight of Fluoropolymer)

#### Sample Preparation Method

A polymer was dissolved in perfluorobenzene to prepare a 2 mass% polymer solution, and the polymer solution was passed through a membrane filter (0.22 μm) to obtain a sample solution.

#### Measurement Method

Standard sample for measurement of molecular weight: polymethyl methacrylate
Detection method: RI (differential refractometer)

### Confirmation of Polymer Solubility

Whether the polymer was dissolved in the liquid was determined as follows.

Each of the prepared liquids was visually observed, and when no undissolved polymer was observed and the entire liquid flowed uniformly at room temperature, it was determined that the polymer was dissolved.

### Average Film Thickness

The average film thickness was defined as the average value of a thickness measured 5 times with a micrometer. When measuring the thickness of a film itself was difficult, such as when a film formed on a base material of a substrate etc. could not be peeled off, the average film thickness was calculated by measuring the thickness of the base material before film formation and the thickness of the base material after film formation (the sum of the film thickness and the base material thickness) 5 times each with a micrometer, and subtracting the average value of the thickness before film formation from the average value of the thickness after film formation.

### Indentation Hardness and Indentation Elastic Modulus

The indentation hardness ($H_{IT}$; indentation hardness) of the sample was measured using an ENT-2100 ultra-fine hardness tester produced by Nanotec Corporation. The indentation elastic modulus was also measured at the same time. The test was performed by adjusting the indentation depth to be 1/10 or less of the thickness.

### Measurement Method for Total Light Transmittance and Haze

The total light transmittance and haze were measured using an NDH 7000SPII haze meter (produced by Nippon Denshoku Industries Co., Ltd.) in accordance with JIS K7136 (haze value) and JIS K7361-1 (total light transmittance). A film with an average film thickness of 100 μm was used as the sample to be measured. The sample was produced

by coating a glass plate with a coating agent such that the thickness after drying was 100 μm, performing drying at 80°C for 4 hours, and peeling off the resulting dried film with an average film thickness of 100 μm from the glass plate.

Transmittance at Each Wavelength

The transmittance at a specific wavelength of a sample (a film with an average film thickness of 100 μm) was measured using a Hitachi U-4100 spectrophotometer. An integrating sphere detector was used as the detector.

Refractive Index

The refractive index of a sample at 23°C was measured with an Abbe refractive index meter (NAR-1T SOLID, produced by Atago Co., Ltd.). The wavelength was a wavelength approximate to D-line because of the use of the LED attached to the device.

Abbe Number

**[0245]** The Abbe number of a sample at 23°C was measured with an Abbe refractive index meter (NAR-1T SOLID, produced by Atago Co., Ltd.).

Reflectance

An absolute specular reflector was attached to a Hitachi U-4100 spectrophotometer, and the reflectance at 550 nm at 5° was measured.

Water Absorption (24°C)

The weight of a sample that had been thoroughly dried beforehand was measured and set as W0. The sample was then completely immersed in water at 24°C that was 100 times or greater than W0 by mass. The weight of the sample after 24 hours was measured and set as W24. The water absorption was determined according to the following formula.

$$\text{Water absorption (\%)} = 100 \times (W24 - W0)/W0$$

Water Absorption (60°C)

The weight of a sample that had been thoroughly dried beforehand was measured and set as W0, and then completely immersed in water at 60°C that was 100 times or greater than W0 by mass. The weight of the sample after 24 hours was measured and set as W24. The water absorption was determined according to the following formula.

$$\text{Water absorption (\%)} = 100 \times (W24 - W0)/W0$$

Tensile Elastic Modulus

A sample (length: 30 mm, width: 5 mm, thickness: 0.1 mm) was measured with a DVA220 dynamic viscoelasticity measurement device produced by IT Measurement Control Co., Ltd., under the conditions of a tensile mode, a grip width of 20 mm, a measurement temperature of 25°C to 150°C, a temperatureincreasing rate of 2°C/min, and a frequency of 1 Hz. The elastic modulus value at 25°C was defined as a tensile elastic modulus.

Tensile Strength

The tensile strength of a film was measured using an AGS-100NX autograph produced by Shimadzu Corporation. The sample was cut to a dumbbell shape 5B as stated in JIS K7162. The measurement was performed under the conditions of a chuck-to-chuck distance of 12 mm, a crosshead speed of 1 mm/min, and room temperature.

Thermal Decomposition Temperature

The temperatures at which the mass loss percentage of a sample became 0.1% and 5% were measured at a temperatureincreasing rate of 10°C/minute in an air atmosphere using a thermogravimetric-differential thermal analyzer (Hitachi High-Tech Science Corporation; STA7200).

Glass Transition Temperature (Tg)

The temperature was increased (first run), decreased, and then increased (second run) at 10°C/minute in the temperature range of 30°C or higher and 200°C or lower using a DSC (differential scanning calorimeter; Hitachi High-Tech Science Corporation, DSC7000); the midpoint of the endothermic curve in the second run was determined to be the glass transition temperature (°C).

Coefficient of Linear Expansion

A thermomechanical analyzer (TMA8310; produced by Rigaku Corporation) was set in a tensile mode with a chuck-to-chuck distance of 15 mm. A sample cut to a size of 5 mm in width and 20 mm in length was held with the chucks, and the temperature was increased from room temperature to 150°C (1st up), decreased to room temperature, and then increased to 150°C (2nd up) at 2°C/minute. The average coefficient of linear expansion at 25°C or higher and 80°C or lower in the 2nd up was determined and defined as the coefficient of linear expansion.

Preparation Example 1: Polymerization of Fluoropolymer Comprising Unit (1-11) as Main Component and Production of Polymer Solution (Polymerization Reaction Mixture)

The monomer (M1-11) (10 g), ethyl nonafluorobutyl ether (20 g) as a solvent, and the initiator solution (1) (0.041 g) were placed in a 50-mL glass container, and a polymerization reaction was then performed for 20 hours while the mixture was heated such that the internal temperature was 40°C, thereby producing a fluoropolymer (1-11) (9.0 g, Mw: 97533). The fluoropolymer in the polymerization reaction mixture was dissolved, and the concentration was 31 mass%.
The weight of the polymer in the composition was measured by distilling off the unreacted starting material, the solvent, the initiator residue, and the impurities contained in a trace amount in the monomer by vacuum drying at 120°C after the completion of the polymerization reaction.

Comparative Preparation Example 1: Production of Teflon (Registered Trademark) Solution

Teflon (registered trademark) AF1600 (2.0 g, Mw: 229738), which is a commercially available fluoropolymer, was added to methyl nonafluorobutyl ether (8.0 g), and the mixture was stirred at room temperature for 2 days to prepare a uniformly dissolved solution.
Teflon (registered trademark) AF1600 contains the monomer unit represented by the following formula (10) and the monomer unit represented by the following formula (20) in a ratio of 65:35 (molar ratio).

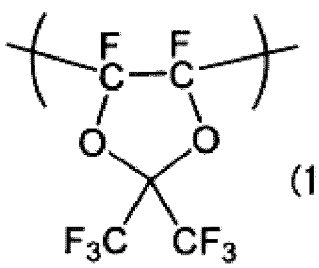
(10)

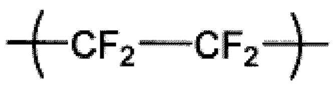
(20)

Example 1

The polymerization reaction mixture obtained in Preparation Example 1 was directly used as a coating agent, and a protective display film was produced as follows.
A glass substrate was coated with the coating agent such that the thickness after drying was 100 μm, and drying was performed at 80°C for 4 hours to form a transparent film. The film was then peeled off from the glass plate, thereby obtaining a fluoropolymer (1-11) film with an average film thickness of 100 μm.
The optical properties of the obtained film were measured. The results are shown below. Further, Fig. 1 shows

the transmittance at each wavelength.

Total light transmittance: 96%
Haze: 0.34%
Transmittance (193 nm): 74.4%
Transmittance (550 nm): 94.6%
Refractive index: 1.335
Abbe number: 91
Reflectance (550 nm): 0.62%

The obtained film had sufficient transmittance over the entire wavelength range and was thus confirmed to be suitable for use in protecting displays. In addition, the film had a very low refractive index and a very low reflectance, and was thus confirmed to be useful for anti-reflection for displays.

The following items of the obtained film were also measured. The results are shown below.

Indentation hardness: 420 $N/mm^2$
Indentation elastic modulus: 3.3 GPa
Water absorption (24°C): 0.00%
Water absorption (60°C): 0.09%
Tensile elastic modulus: 3.1 GPa
Tensile strength: 20.9 MPa
Thermal decomposition temperature (0.1%): 294.5°C
Thermal decomposition temperature (5%): 439.4°C
Glass transition temperature: 129°C
Coefficient of linear expansion: 80 ppm

The obtained film had high indentation hardness and high indentation elastic modulus, and thus exhibited high hardness. Therefore, the obtained film had high scratch resistance and was thus confirmed to be useful as a protective film.

The obtained film had a low water absorption and was thus confirmed to achieve a reduction in the expansion due to water absorption and in change in the refractive index due to water absorption. The water absorption of general-purpose optical resin, e.g., polymethyl methacrylate, is about 2%.

Comparative Example 1: Film Formed from Teflon (Registered Trademark) AF1600

A film was formed using the fluoropolymer solution obtained in Comparative Preparation Example 1 as a coating agent. A glass substrate was coated with the coating agent, and drying was performed at 80°C for 4 hours. The film was then peeled off from the glass plate, thereby obtaining a transparent film with an average film thickness of 50 μm. The indentation hardness and indentation elastic modulus of the obtained film were 145 $N/mm^2$ and 2 GPa, respectively, which were lower than the values of Example 1.

**Claims**

1. A protective display film comprising a fluoropolymer,

wherein
the fluoropolymer comprises, as a main component, a monomer unit represented by formula (1):

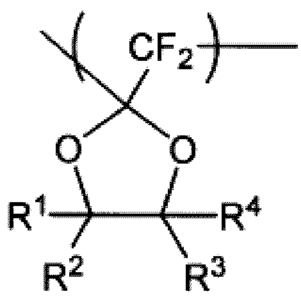

(1)

wherein $R^1$ to $R^4$ are each independently a fluorine atom, a fluoroalkyl group, or a fluoroalkoxy group.

**2.** The protective display film according to claim 1, wherein the fluoropolymer further comprises a fluoroolefin unit.

**3.** The protective display film according to claim 2, wherein the fluoroolefin unit is at least one member selected from the group consisting of a fluorine-containing perhaloolefin unit, a vinylidene fluoride unit, a trifluoroethylene unit, a pentafluoropropylene unit, and a 1,1,1,2-tetrafluoro-2-propylene unit.

**4.** The protective display film according to claim 3, wherein the fluorine-containing perhaloolefin unit is at least one member selected from the group consisting of a chlorotrifluoroethylene unit, a tetrafluoroethylene unit, a hexafluoropropylene unit, a perfluoro(methyl vinyl ether) unit, a perfluoro(ethyl vinyl ether) unit, a perfluoro(propyl vinyl ether) unit, a perfluoro(butyl vinyl ether) unit, and a perfluoro(2,2-dimethyl-1,3-dioxol) unit.

**5.** The protective display film according to claim 2, wherein the fluoroolefin unit is at least one member selected from the group consisting of a chlorotrifluoroethylene unit, a tetrafluoroethylene unit, a hexafluoropropylene unit, a perfluoro(methyl vinyl ether) unit, and a perfluoro(propyl vinyl ether) unit.

**6.** The protective display film according to any one of claims 1 to 5, having an average film thickness of 10 nm or more.

**7.** The protective display film according to any one of claims 1 to 6, having an indentation hardness of 250 $N/mm^2$ or more and 1000 $N/mm^2$ or less.

**8.** The protective display film according to any one of claims 1 to 7, having an indentation elastic modulus of 2.5 GPa or more and 10 GPa or less.

**9.** The protective display film according to any one of claims 1 to 8, having a total light transmittance of 90% or more.

**10.** The protective display film according to any one of claims 1 to 9, having a refractive index of 1.29 or more and 1.37 or less.

**11.** The protective display film according to any one of claims 1 to 10, having an Abbe number of 80 or more and 100 or less.

**12.** The protective display film according to any one of claims 1 to 11, having a water absorption at 24°C of 0.1% or less.

**13.** The protective display film according to any one of claims 1 to 12, wherein the fluoropolymer has a glass transition temperature of 110°C or higher.

**14.** A display comprising the protective display film of any one of claims 1 to 13.

**15.** A coating agent for forming the protective display film of any one of claims 1 to 13, the coating agent comprising a fluoropolymer and an aprotic solvent,

wherein
the fluoropolymer comprises, as a main component, a monomer unit represented by formula (1):

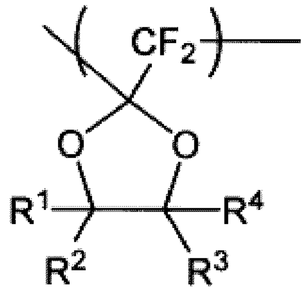

(1)

wherein $R^1$ to $R^4$ are each independently a fluorine atom, a fluoroalkyl group, or a fluoroalkoxy group.

**16.** The coating agent according to claim 15, wherein the content of the fluoropolymer is 20 mass% or more and 65 mass% or less based on the total mass of the coating agent.

**17.** The coating agent according to claim 15 or 16, wherein the aprotic solvent is at least one solvent selected from the group consisting of perfluoroaromatic compounds, perfluorotrialkylamines, perfluoroalkanes, hydrofluorocarbons, perfluorocyclic ethers, hydrofluoroethers, and olefin compounds containing at least one chlorine atom.

**18.** The coating agent according to any one of claims 15 to 17, wherein the aprotic solvent is at least one hydrofluoroether.

Fig. 1

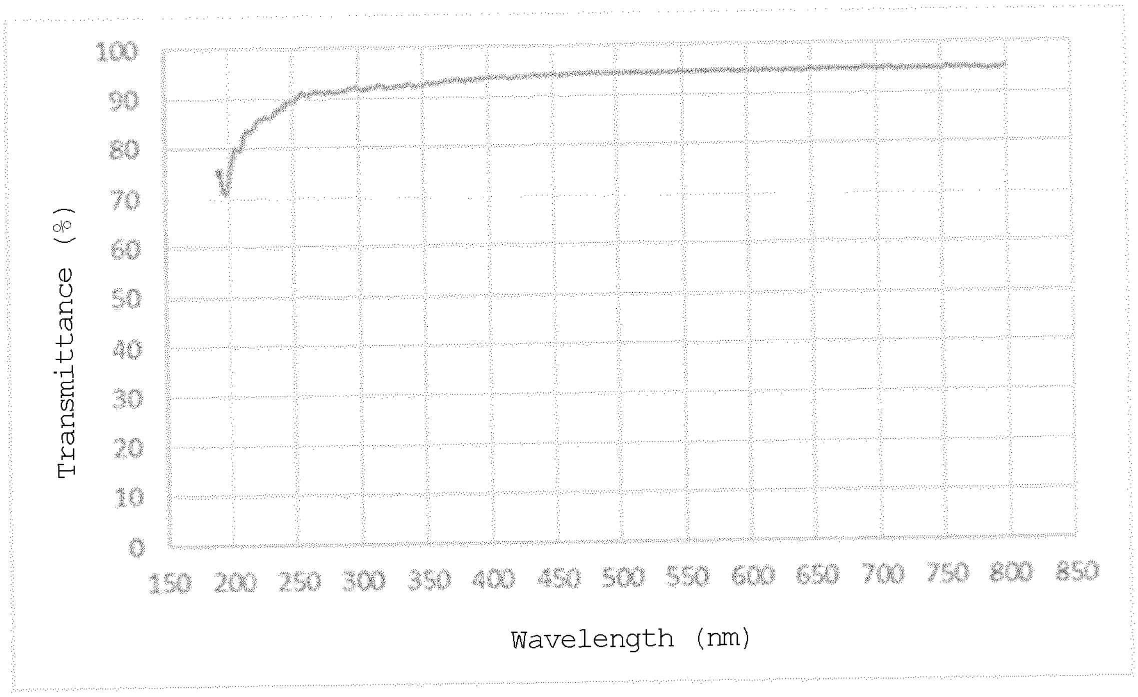
Transmittance (%)
100
90
80
70
60
50
40
30
20
10
0
150 200 250 300 350 400 450 500 550 600 650 700 750 800 850
Wavelength (nm)

## INTERNATIONAL SEARCH REPORT

International application No.
PCT/JP2021/000254

A. CLASSIFICATION OF SUBJECT MATTER
G02B 1/14(2015.01)i; C08F 24/00(2006.01)i; C09D 7/20(2018.01)i; C09D 127/14(2006.01)i; C09D 127/16(2006.01)i; G02B 1/111(2015.01)i
FI: G02B1/14; C08F24/00; G02B1/111; C09D127/14; C09D127/16; C09D7/20
According to International Patent Classification (IPC) or to both national classification and IPC

B. FIELDS SEARCHED
Minimum documentation searched (classification system followed by classification symbols)
G02B1/14; C08F24/00; C09D7/20; C09D127/14; C09D127/16; G02B1/111

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2007-517083 A (JAPAN SCIENCE AND TECHNOLOGY AGENCY) 28 June 2007 (2007-06-28) paragraphs [0002], [0040]-[0046], [0048]-[0060] | 1-18 |
| Y | US 3308107 A (E. I. DU PONT DE NEMOURS AND COMPANY) 07 March 1967 (1967-03-07) in particular, tables 1-5 | 1-18 |
| Y | US 3450716 A (E.I. DU PONT DE NEMOURS & CO.) 17 June 1969 (1969-06-17) example 4 | 1-18 |
| Y | JP 58-069877 A (E. I. DU PONT DE NEMOURS AND COMPANY) 26 April 1983 (1983-04-26) claim 2 | 1-18 |
| Y | WO 2008/069301 A1 (DAIKIN INDUSTRIES, LTD.) 12 June 2008 (2008-06-12) paragraph [0004] | 18 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 February 2021 (22.02.2021) | 09 March 2021 (09.03.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2021/000254

C (Continuation). DOCUMENTS CONSIDERED TO BE RELEVANT

| Category* | Citation of document, with indication, where appropriate, of the relevant passages | Relevant to claim No. |
|---|---|---|
| Y | WO 00/04109 A1 (DAIKIN INDUSTRIES, LTD.) 27 January 2000 (2000-01-27) p. 4 | 18 |
| A | HE, Yigang, JUNK, Christopher P., CAWLEY, Jann J., and LEMAL, David M., "A Remarkable [2.2.2] Propellane", JOURNAL OF THE AMERICAN CHEMICAL SOCIETY, 18 April 2003, vol. 125, no.19, pp. 5590-5591 the whole document | 1-18 |

Form PCT/ISA/210 (continuation of second sheet) (January 2015)

**INTERNATIONAL SEARCH REPORT**
Information on patent family members

International application No.
PCT/JP2021/000254

| Patent Documents referred in the Report | Publication Date | Patent Family | Publication Date |
|---|---|---|---|
| JP 2007-517083 A | 28 Jun. 2007 | WO 2005/054313 A1<br>page 1, pp. 10-20<br>US 2007/0142581 A1<br>EP 1836231 A1<br>JP 4741508 B2 | |
| US 3308107 A | 07 Mar. 1967 | GB 1092016 A<br>DE 1645126 A<br>FR 1478067 A<br>NL 6605837 A | |
| US 3450716 A | 17 Jun. 1969 | (Family: none) | |
| JP 58-069877 A | 26 Apr. 1983 | US 4429143 A<br>claim 19<br>EP 196693 A1<br>CA 1273947 A | |
| WO 2008/069301 A1 | 12 Jun. 2008 | US 2010/0048956 A1<br>paragraph [0004] | |
| WO 00/04109 A1 | 27 Jan. 2000 | US 6491979 B1<br>column 2<br>EP 1127935 A1<br>JP 4513942 B2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002038075 A